# EUROPEAN PATENT SPECIFICATION

(11) **EP 3 858 205 B1**
(45) Date of publication and mention of the grant of the patent: **19.10.2022**
(21) Application number: 21152627.2
(22) Date of filing: 20.01.2021
(51) Int. Cl.: A47J 43/25, B26D 1/02, B26D 3/28

(54) **APPARATUS AND METHOD FOR OBTAINING SHAVINGS OF CHEESE**
VORRICHTUNG UND VERFAHREN ZUR HERSTELLUNG VON KÄSESPÄNEN
APPAREIL ET PROCÉDÉ PERMETTANT D'OBTENIR DES COPEAUX DE FROMAGE

(30) Priority: 30.01.2020 IT 202000001828
(43) Date of publication of application: 04.08.2021
(73) Proprietor: Corte Parma Alimentare S.r.l., 43123 Parma (IT)
(72) Inventor: AMORETTI, Egidio, 43123 PARMA (IT)
(74) Representative: Monelli, Alberto

(56) References cited:
- WO-A1-2011/054114
- DE-A1- 2 749 748
- JP-A- 2005 144 574

## Description

The present invention relates to an apparatus and a method for obtaining shavings of cheese.

In particular, the present invention is applied in the production of shavings of cheese. Shavings of cheese means, for example, flakes, ribbons, strips, sheets, etc. of cheese.

The so-called Raspadura, or scraping, is known, i.e., a manner of serving Grana Padano cheese, presenting it as very thin flakes, scraped with a knife from a wheel of cheese from the Grana Padano cheese family or other types of semi-aged or aged cheeses adapted to be subjected to a process for obtaining the shavings. The scraping of these flakes of cheese is carried out manually by an operator. It is clear that a manually-performed operation has a number of disadvantages. In particular, the times for performing the operation are long, causing poor production efficiency. Furthermore, the operator must handle sharp blades and perform a repetitive gesture which can easily lead to error. Therefore, the operation is carried out in an unsafe condition for the assigned person.

An apparatus for obtaining shavings of cheese is disclosed by WO 2011/054114.

In this context, the technical task underpinning the present invention is to propose an apparatus and a method for obtaining shavings of cheese, which obviate the above-cited drawbacks of the prior art.

In particular, the object of the present invention is to propose an apparatus and a method for obtaining shavings of cheese, which reduce the operation times and increase production efficiency.

A further object of the present invention is to provide an apparatus and a method for obtaining shavings of cheese, which increase the safety of the operation.

The stated technical task and specified objects are substantially achieved by an apparatus and by a method for obtaining shavings of cheese, comprising the technical features disclosed in one or more of the appended claims.

Further characteristics and advantages of the present invention will more fully emerge from the approximate and thus non-limiting description of a preferred but not exclusive embodiment of an apparatus and a method for obtaining shavings of cheese, as illustrated in the accompanying drawings, in which:

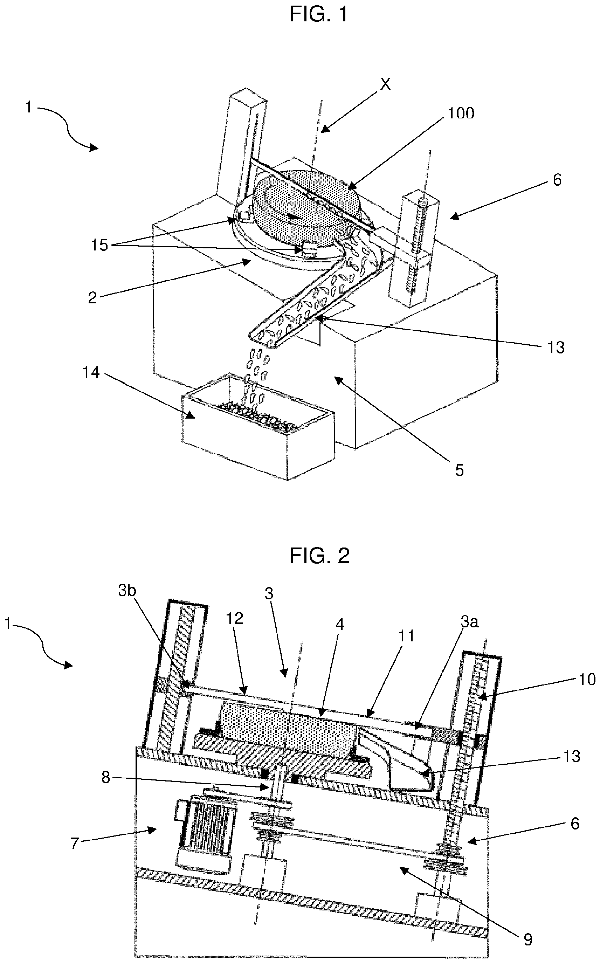

- figure 1 shows an apparatus for obtaining shavings of cheese according to the present invention, in a perspective view;
- figure 2 shows the apparatus of figure 1, in a sectioned front view.

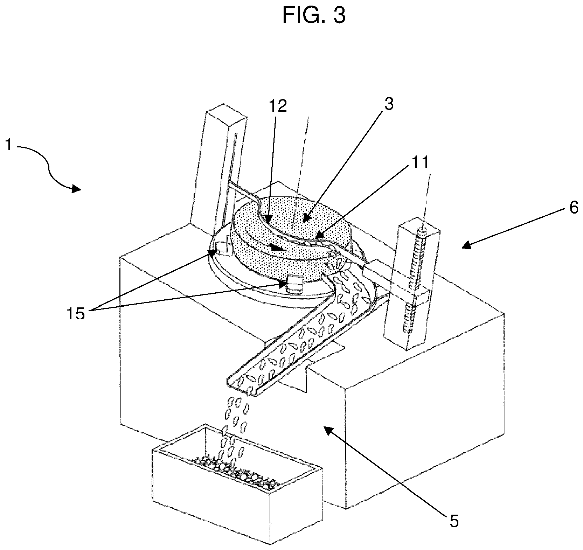

- figure 3 shows an embodiment of the tool of the apparatus of figure 1, in a perspective view.

With reference to the figures, number 1 denotes an apparatus for obtaining shavings of cheese.

The apparatus 1 comprises supporting means 2 suitable for supporting the wheel 100 and rotatable about an axis of rotation X. Thereby, the wheel 100 can rotate around the axis X.

Preferably, the supporting means 2 comprises a platform. Preferably, the platform has a substantially circular shape.

The apparatus 1 further comprise a tool 3 provided with a cutting edge 4 to scrape the wheel 100, thus generating shavings of cheese.

Preferably, the tool 3 is arranged above at least a portion of the supporting means 2.

The tool 3 extends between a first and a second end 3a, 3b.

In accordance with the embodiment described and illustrated herein, such ends 3a, 3b are located opposite each other with respect to the supporting means 2.

Preferably, the tool 3 comprises along a direction substantially orthogonal to the axis of rotation X at least:
- a first portion 11 having a first substantially constant height, along which the cutting edge 4 is arranged;
- a second portion 12 having a second height lower than the first.

In accordance with an alternative embodiment, the two ends 3a, 3b are located at a portion of the supporting means 2. The cutting edge 4 extends between these two ends 3a, 3b.

Preferably, the tool 3 has an arched extension between the two ends 3a, 3b. Preferably, the arched extension is such that the minimum distance between the cutting edge 4 and the axis of rotation X is substantially comprised between 2 and 5 centimetres. More preferably, such a distance is comprised between 3 and 4 centimetres.

This shape of the tool 3 is particularly advantageous because it allows the shavings generated by the scraping to be conveyed towards the outside of the wheel 100. At the same time, at the end of the scraping of the wheel 100 a central cylinder of cheese remains at the axis of rotation X, known in the art as the "core", which is usually reused for other applications. Thereby, an optimal final product is obtained and the waste of cheese is avoided.

The apparatus 1 comprises moving means 6 for moving the tool 3 closer to/farther from the supporting means 2. Preferably, the tool 3 is moved along a direction substantially parallel to the axis of rotation X. In particular, the tool 3 translates along a direction substantially parallel to the axis of rotation X.

In the embodiment described and illustrated herein, the moving means 6 comprises a system of the screw-nut screw type. The screw 10 has a main extension along a direction substantially parallel to the axis X.

For example, the tool 3 is rigidly mounted at the first end 3a to the nut screw and at the second end 3b to a guide.

Preferably, the apparatus 1 comprises rotation means 7 for rotating the supporting means 2.

Preferably, the moving means 6 is in synchrony with the rotation means 7. For example, this means that the approach of the tool 3 to the supporting means 2 occurs as a function of the rotation of the supporting means 2. Preferably, the rotation means 7 comprises at least one motorized pin 8 arranged below the supporting means 2 and rotatable about the axis of rotation X.

Preferably, the screw is operatively connected to the pin 8 by means of a kinematic mechanism 9. For example, such a kinematic mechanism 9 comprises a pair of pulleys. Thereby, the movement of the tool 3 occurs as a function of the rotation of the pin 8.

In accordance with an alternative embodiment, the moving means 6 comprises a first and a second guide. The tool 3 is rigidly mounted thereto at the first and at the second end 3a, 3b, respectively.

In accordance with a further embodiment, the moving means 6 comprises an elastic system operatively active on the tool 3 to move it towards/away from the supporting means 2. Preferably, the elastic system comprises a first and/or a second spring arranged at the first and/or the second end 3a, 3b of the tool 3, respectively.

The apparatus 1 further comprises collecting means 5 for collecting shavings, arranged at least partly near the supporting means 2 so as to collect the shavings evacuated from the wheel 100 during rotation. Preferably, the collecting means 5 comprises a chute 13 and a collecting zone 14, in which the chute is such as to guide the shavings towards the collecting zone 14. For example, this collecting zone 14 is a collection tank or a conveyor belt.

Preferably, the collecting means 5 is moveable towards/away from the tool 3.

Preferably, the movement of the collecting means 5 occurs in synchrony with the movement of the tool 3. For example, this means that the lowering of the tool 3 towards the supporting means 2 involves a lowering of the collecting means 5.

Preferably, the axis of rotation X is inclined with respect to a vertical line so as to facilitate the conveyance of the shavings towards an outer edge of the wheel 100.

Suitably, a holding means 15 for holding the wheel 100 is provided on the supporting means 2.

In the embodiment described and illustrated herein, the holding means 15 comprises at least one abutment element on which a lateral side of the wheel 100 abuts. Preferably, the holding means 15 comprises three abutment elements arranged equally spaced along a substantially circumferential path centred on the axis X. Thereby, a correct holding of the wheel is ensured.

In an alternative embodiment, the holding means 15 comprises a protrusion originating from the supporting means 2 at the axis X and extending in a direction substantially parallel thereto so that the protrusion inserts into the wheel 100 to keep it in position.

The method for obtaining shavings of cheese, object of the present invention, is described below. Such a method is advantageously implemented by an apparatus 1 having one or more of the features described previously.

The method comprises the step of positioning a wheel 100 of cheese on supporting means 2. The wheel 100 has a first and a second opposing face and a lateral side. Preferably, the wheel 100 is substantially cylindrical.

A step of positioning a tool 3 equipped with a cutting edge 4 in contact with the first face of the wheel 100 is also included.

Preferably, the cutting edge 4 is in contact with substantially half of the first face of the wheel 100.

The method further comprises the step of setting the wheel 100 in rotation about an axis transverse to the first face.

After having set the wheel in rotation, it is scraped using the cutting edge 4, generating shavings of cheese.

This scraping determines a consumption of the wheel 100. Given a certain distance, which we will call the height of the wheel 100, between the first face and the second face before the scraping, by scraping the wheel 100 the height gradually decreases. Thus, the tool 3 is moved towards the second face of the wheel 100 to compensate the consumption of the wheel 100 and to continue scraping it on oriented faces such as the first and the second face, but progressively closer to the second face. Preferably, the tool 3 is moved continuously. Alternatively, the tool 3 is moved intermittently.

Preferably, the step of scraping the wheel 100 involves scraping an inclined surface with respect to a horizontal plane. That is, the supporting means 2 and consequently the wheel 100 are inclined with respect to a vertical axis.

Preferably, the method comprises a step of holding the wheel 100 before the step of setting the wheel 100 in rotation.

Preferably, the step of collecting the shavings comprises the step of conveying the shavings of cheese towards a predetermined zone:
- both by centrifugal force due to the rotation of the wheel 100,
- and by gravity due to an inclination of said inclined surface.

Thereby, it is easier to collect the shavings because the combination of a motion by centrifugal force and a motion by gravity allows an optimal conveyance of the shavings.

Preferably, the predetermined zone is part of collecting means 5. For example, the collecting means 5 comprises a collecting zone 14. Preferably, the collecting means 5 comprises a chute 13 for guiding the shavings towards the collecting zone 14.

The features of the apparatus and method for obtaining shavings of cheese, according to the present invention, are clear from the description, as are the advantages.

In particular, the positioning of a rotating wheel of cheese and a tool equipped with a cutting edge movable towards/away from the wheel allows the operation times to be significantly reduced. Then, since there is no longer a need for an operator to manually act on the wheel to scrape it, safety increases considerably. In addition, the quality of the final product is uniform.

Furthermore, the arched extension of the tool along the first face of the wheel allows an optimal scraping and promotes the conveyance of the shavings of cheese towards an outer edge of the wheel. In addition, the cheese cylinder which remains at the end of the process due to the arched shape of the tool is reused, so there is no waste of cheese.

Furthermore, the synchronization of the rotary motion of the wheel with the movement of the tool towards the wheel allows keeping the cutting edge always in contact with the wheel being consumed, thus ensuring a continuity of the scraping operation and a quality product.

Furthermore, the arrangement of an inclined wheel of cheese allows improving the conveyance of the shavings of cheese towards an outer edge of the wheel thanks to the gravity due to the inclination.

## Claims

1. An apparatus (1) for obtaining shavings of cheese, comprising:
- supporting means (2) suitable for supporting a wheel (100) of cheese and rotatable about an axis of rotation (X);
- a tool (3) provided with a cutting edge (4) to scrape the wheel (100), generating shavings of cheese;
- collecting means (5) for collecting shavings arranged at least partly near the supporting means (2);
- moving means (6) for moving the tool (3) closer to/farther from the supporting means (2)
**characterised in that** said tool (3) extends between a first and a second end (3a, 3b) located opposite one another with respect to the supporting means (2).

2. The apparatus (1) according to claim 1, wherein said tool (3) is arranged above at least a portion of the supporting means (2).

3. The apparatus (1) according to claim 1 or 2, wherein said tool (3) is moved along a direction substantially parallel to the axis of rotation (X).

4. The apparatus (1) according to any one of the preceding claims, wherein said tool (3) comprises, along a direction substantially parallel to the axis of rotation (X), at least a first portion (11) having a substantially constant first height and a second portion (12) having a second height lower than the first, said cutting edge (4) being arranged along said first portion (11).

5. The apparatus (1) according to any one of the preceding claims, wherein said tool (3) has an arched extension.

6. The apparatus (1) according to claim 5, wherein the minimum distance between the cutting edge (4) and the axis of rotation (X) is substantially comprised between 2 and 5 centimetres.

7. The apparatus (1) according to any one of the preceding claims, further comprising holding means (15) for holding the wheel (100) on the supporting means (2), said axis of rotation (X) being inclined with respect to a vertical line.

8. The apparatus (1) according to any one of the preceding claims, wherein said moving means (6) comprises at least one system of the screw-nut screw type, said tool (3) being rigidly mounted at the first end (3a) to said nut screw and at the second end (3b) to a guide.

9. The apparatus (1) according to claim 8, further comprising rotation means (7) for rotating the supporting means (2) comprising at least a motorized pin (8) arranged below the supporting means (2) and rotatable about the axis of rotation (X), said screw (10) being operatively connected to the pin (8) by means of a kinematic mechanism (9).

10. The apparatus (1) according to any one of the preceding claims, wherein said collecting means (13) can be moved towards/away from the tool (3).

11. The apparatus (1) according to any one of the preceding claims, wherein said collecting means (5) comprises a collecting zone (14) and a chute (13) such as to guide the shavings towards the collecting zone (14).

12. A method for obtaining shavings of cheese, comprising the steps of:
- positioning on supporting means (2) a wheel (100) of cheese having a first and a second opposing face and a lateral side;
- positioning a tool (3) equipped with a cutting edge (4) in contact with the first face of the wheel (100);
- setting the wheel (100) in rotation about an axis transverse to the first face;
- scraping the wheel (100) set in rotation by means of the cutting edge (4), generating shavings of cheese;
- collecting the shavings of cheese
**characterised in that** said tool (3) extends between a first and a second end (3a, 3b) located opposite one another with respect to the supporting means (2).

13. The method according to claim 12, **characterized in that** the step of scraping the wheel (100) determines a consumption of the wheel (100), said method comprising the step of moving the tool (3) towards the second face of the wheel (100) to compensate the consumption of the wheel (100) and continue the step of scraping the wheel (100).

14. The method according to claim 12 or 13, wherein the step of scraping the wheel (100) envisages scraping an inclined surface with respect to a horizontal plane, the step of collecting the shavings comprising the step of conveying the shavings of cheese towards a predetermined zone,
- both by centrifugal force due to the rotation of the wheel (100),
- and by gravity due to an inclination of said inclined surface.

## Patentansprüche

1. Vorrichtung (1) zur Herstellung von Käsespänen, umfassend:
- Tragemittel (2), die geeignet sind, um ein Käserad (100) zu tragen und die um eine Rotationsachse (X) drehbar sind;
- ein Werkzeug (3), das mit einer Schneide (4) versehen ist, um das Rad (100) abzukratzen und Käsespäne zu erzeugen;
- Sammelmittel (5), um Käsespäne zu sammeln, angeordnet mindestens teilweise in der Nähe der Tragemittel (2);
- Bewegungsmittel (6) zum Bewegen des Werkzeugs (3) hinführend zu den/wegführend von den Tragemitteln (2), **dadurch gekennzeichnet, dass** sich das Werkzeug (3) zwischen einem ersten und einem zweiten Ende (3a, 3b) erstreckt, die einander entgegengesetzt in Bezug auf die Tragemittel (2) befindlich sind.

2. Vorrichtung (1) nach Anspruch 1, wobei das Werkzeug (3) über mindestens einem Abschnitt der Tragemittel (2) angeordnet ist.

3. Vorrichtung (1) nach Anspruch 1 oder 2, wobei das Werkzeug (3) entlang einer Richtung bewegt wird, die im Wesentlichen parallel zur Rotationsachse (X) verläuft.

4. Vorrichtung (1) nach einem der vorhergehenden Ansprüche, wobei das Werkzeug (3) entlang einer Richtung, die im Wesentlichen zur Rotationsachse (X) verläuft, mindestens einen ersten Abschnitt (11) umfasst, der eine im Wesentlichen konstante erste Höhe aufweist, und einen zweiten Abschnitt (12), der eine zweite Höhe aufweist, die niedriger ist als die erste, wobei die Schneide (4) entlang des ersten Abschnitts (11) angeordnet ist.

5. Vorrichtung (1) nach einem der vorhergehenden Ansprüche, wobei das Werkzeug (3) eine gewölbte Ausdehnung aufweist.

6. Vorrichtung (1) nach Anspruch 5, wobei der Mindestabstand zwischen der Schneide (4) und der Rotationsachse (X) im Wesentlichen zwischen 2 und 5 Zentimetern enthalten ist.

7. Vorrichtung (1) nach einem der vorhergehenden Ansprüche, zudem umfassend Haltemittel (15) zum Halten des Rads (100) auf den Tragemitteln (2), wobei die Rotationsachse (X) in Bezug auf eine vertikale Linie geneigt ist.

8. Vorrichtung (1) nach einem der vorhergehenden Ansprüche, wobei die Bewegungsmittel (6) mindestens ein System vom Schraubenmuttertyp umfassen, wobei das Werkzeug (3) steif am ersten Ende (3a) an der Schraubenmutter und am zweiten Ende (3b) an einer Führung montiert ist.

9. Vorrichtung (1) nach Anspruch 8, zudem umfassend Rotationsmittel (7) zum Drehen der Tragemittel (2), umfassend mindestens einen motorbetriebenen Zapfen (8), der unter den Tragemitteln (2) angeordnet und um die Rotationsachse (X) drehbar ist, wobei die Schraube (10) betriebswirksam mit dem Zapfen (8) mittels eines kinematischen Mechanismus (9) verbunden ist.

10. Vorrichtung (1) nach einem der vorhergehenden Ansprüche, wobei die Sammelmittel (13) hinführend zum/wegführend vom Werkzeug (3) bewegt werden können.

11. Vorrichtung (1) nach einem der vorhergehenden Ansprüche, wobei die Sammelmittel (5) eine Sammelzone (14) und eine Rinne (13) umfassen, sodass die Späne hinführend zur Sammelzone (14) geführt werden.

12. Verfahren zur Herstellung von Käsespänen, umfassend die folgenden Schritte:
- Positionieren eines Käserads (100), aufweisend eine erste und eine zweite, gegenständig angeordnete Seitenfläche und eine seitliche Seitenfläche, auf Haltemitteln (2);
- Positionieren eines Werkzeugs (3), das mit einer Schneide (4) versehen ist, in Kontakt mit der ersten Seitenfläche des Rads (100);
- Versetzen des Rads (100) in Drehung um eine Achse, die quer zur ersten Seitenfläche verläuft;
- Abkratzen des in Drehung versetzten Rads (100) mittels einer Schneide (4) und Erzeugen von Käsespänen;
- Sammeln der Käsespäne,
**dadurch gekennzeichnet, dass** sich das Werkzeug (3) zwischen einem ersten und einem zweiten Ende (3a, 3b) erstreckt, die einander entgegengesetzt in Bezug auf die Tragemittel (2) befindlich sind.

13. Verfahren nach Anspruch 12, **dadurch gekennzeichnet, dass** der Schritt zum Abkratzen des Rads (100) einen Verbrauch des Rads (100) bewirkt, wobei das Verfahren den Schritt zum Bewegen des Werkzeugs (3) hinführend zur zweiten Seitenfläche des Rads (100) umfasst, um den Verbrauch des Rads (100) auszugleichen und den Schritt zum Abkratzen des Rads (100) weiterzuführen.

14. Verfahren nach Anspruch 12 oder 13, wobei der Schritt zum Abkratzen des Rads (100) das Abkratzen einer geneigten Oberfläche in Bezug auf eine horizontale Ebene beinhaltet, wobei der Schritt zum Sammeln der Späne den Schritt zum Fördern der Käsespäne hinführend zu einer vorgegebenen Zone umfasst,
- sowohl durch Zentrifugalkraft aufgrund der Drehung des Rads (100),
- als auch durch Schwerkraft aufgrund einer Neigung der geneigten Oberfläche.

## Revendications

1. Appareil (1) permettant d'obtenir des copeaux de fromage, comprenant :
- des moyens de support (2) adaptés pour supporter une meule (100) de fromage et pouvant tourner autour d'un axe de rotation (X) ;
- un outil (3) pourvu d'un bord coupant (4) pour racler la meule (100), générant des copeaux de fromage ;
- des moyens de collecte (5) pour collecter les copeaux disposés au moins partiellement à proximité des moyens de support (2) ;
- des moyens de déplacement (6) pour rapprocher/éloigner l'outil (3) des moyens de support (2),
**caractérisé en ce que** ledit outil (3) se prolonge entre une première et une seconde extrémité (3a, 3b) situées à l'opposé l'une de l'autre par rapport aux moyens de support (2).

2. Appareil (1) selon la revendication 1, dans lequel ledit outil (3) est disposé au-dessus d'au moins une partie des moyens de support (2).

3. Appareil (1) selon la revendication 1 ou 2, dans lequel ledit outil (3) est déplacé le long d'une direction essentiellement parallèle à l'axe de rotation (X) .

4. Appareil (1) selon l'une quelconque des revendications précédentes, dans lequel ledit outil (3) comprend, le long d'une direction essentiellement parallèle à l'axe de rotation (X), au moins une première partie (11) ayant une première hauteur essentiellement constante et une deuxième partie (12) ayant une deuxième hauteur inférieure à la première, ledit bord coupant (4) étant disposé le long de ladite première partie (11).

5. Appareil (1) selon l'une quelconque des revendications précédentes, dans lequel ledit outil (3) comporte une extension arquée.

6. Appareil (1) selon la revendication 5, dans lequel la distance minimale entre le bord coupant (4) et l'axe de rotation (X) est essentiellement comprise entre 2 et 5 centimètres.

7. Appareil (1) selon l'une quelconque des revendications précédentes, comprenant de plus des moyens de maintien (15) pour maintenir la meule (100) sur les moyens de support (2), ledit axe de rotation (X) étant incliné par rapport à une ligne verticale.

8. Appareil (1) selon l'une quelconque des revendications précédentes, dans lequel lesdits moyens de déplacement (6) comprennent au moins un système d'écrou de vis du type à vis, ledit outil (3) étant monté rigidement à la première extrémité (3a) sur ledit écrou de vis et à la deuxième extrémité (3b) sur un guide.

9. Appareil (1) selon la revendication 8, comprenant de plus des moyens de rotation (7), pour faire tourner les moyens de support (2), comprenant au moins une broche motorisée (8) disposée sous les moyens de support (2) et pouvant tourner autour de l'axe de rotation (X), ladite vis (10) étant reliée de manière fonctionnelle à la broche (8) au moyen d'un mécanisme cinématique (9).

10. Appareil (1) selon l'une quelconque des revendications précédentes, dans lequel lesdits moyens de collecte (13) peuvent être rapprochés/éloignés de l'outil (3).

11. Appareil (1) selon l'une quelconque des revendications précédentes, dans lequel lesdits moyens de collecte (5) comprennent une zone de collecte (14) et une goulotte (13) de manière à guider les copeaux vers la zone de collecte (14).

12. Procédé permettant d'obtenir des copeaux de fromage, comprenant les étapes de :
- positionner sur des moyens de support (2) une meule (100) de fromage comportant une première et une deuxième face opposée et un côté latéral ;
- positionner un outil (3) équipé d'un bord coupant (4) en contact avec la première face de la meule (100) ;
- placer la meule (100) en rotation autour d'un axe transversal à la première face ;
- racler la meule (100) mise en rotation au moyen du bord coupant (4), générant des copeaux de fromage ;
- collecter les copeaux de fromage,
**caractérisé en ce que** ledit outil (3) se prolonge entre une première et une seconde extrémité (3a, 3b) situées à l'opposé l'une de l'autre par rapport aux moyens de support (2).

13. Procédé selon la revendication 12, **caractérisé en ce que** l'étape consistant à racler la meule (100) détermine une consommation de la meule (100), ledit procédé comprenant l'étape de déplacement de l'outil (3) vers la seconde face de la meule (100) pour compenser la consommation de la meule (100) et poursuivre l'étape de raclage de la meule (100).

14. Procédé selon la revendication 12 ou 13, dans lequel l'étape consistant à racler la meule (100) prévoit de racler une surface inclinée par rapport à un plan horizontal, l'étape de collecte des copeaux comprenant l'étape consistant à transporter des copeaux de fromage vers une zone prédéterminée,
- à la fois par la force centrifuge due à la rotation de la meule (100),
- et par gravité en raison de l'inclinaison de ladite surface inclinée.
